# EUROPEAN PATENT SPECIFICATION

(11) **EP 3 263 432 B1**
(45) Date of publication and mention of the grant of the patent: **08.04.2020**
(21) Application number: 17178033.1
(22) Date of filing: 27.06.2017
(51) Int. Cl.: B62J 6/04, B62J 15/02, B62J 6/18, B62J 13/02

(54) **STRADDLED VEHICLE**
GRÄTSCHSITZFAHRZEUG
VÉHICULE À ENFOURCHER

(30) Priority: 28.06.2016 JP 2016127412
(43) Date of publication of application: 03.01.2018
(73) Proprietor: Yamaha Hatsudoki Kabushiki Kaisha, Iwata-shi Shizuoka 438-8501 (JP)
(72) Inventor: SUGAWARA, Kohei, Iwata-shi, Shizuoka 438-8501 (JP); HATANO, Soichiro, Iwata-shi, Shizuoka 438-8501 (JP)
(74) Representative: Grünecker Patent- und Rechtsanwälte PartG mbB

(56) References cited:
- CN-U- 202 163 558
- CN-U- 204 956 754
- CN-U- 204 956 757
- JP-A- 2012 071 700
- US-A1- 2008 219 014
- US-A1- 2011 241 422

## Description

The present invention relates to a straddled vehicle according to the preamble of independent claim 1. Such a straddled vehicle can be taken from the prior art document CN 204 956 757 U. Moreover, prior art document JP 2012 071700 A teaches some kind of license plate with a respective license plate lamp and such arrangement is provided on the rear fender of a straddled vehicle. The rear fender is directly attached on the vehicle body. A wiring structure of a rear part of a motorcycle is provided which prevents a wire from being displaced. The wiring structure of a rear part is configured so that rear direction indicators of the rear part of a vehicle body and the wire of a rear license lamp are mounted to a storing space formed in a rear fender disposed at the upper side of a rear wheel. The wiring structure of a rear part includes derivation openings for leading a power cable of the rear direction indicators and a power cable of the rear license lamp from the outside to the inside of the storing space; and guide grooves for guiding the power cables led through the derivation openings in a direction perpendicular to a vertical direction.

A straddled vehicle is provided with a rear fender. The rear fender covers a portion of the rear wheel and is able to limit mud spatter from the rear wheel. For example, the rear fender of the straddled vehicle of Japanese Laid-Open Patent Publication No. 2009-208774 is attached to the seat frame and extends downward toward the rear wheel. Further, the rear fender in the straddled vehicle in Japanese Laid-Open Patent Publication No. H10-35562 is attached to the rear frame.

In the straddled vehicle of Japanese Laid-Open Patent Publication No. 2009-208774, the rear fender needs to be extended to a position near the rear wheel in order to improve the function of preventing mud spatter. In this case, there is a problem that the length of the rear fender increases and the rear portion of the vehicle increases in size. Moreover, the license plate and the license plate lamp as well as the rear fender are supported by the seat frame in the straddled vehicle of Japanese Laid-Open Patent Publication No. 2009-208774. Even in this case, there is a problem that the rear portion of the vehicle increases in size.

The rear fender in the straddled vehicle in Japanese Laid-Open Patent Publication No. H10-35562 is attached to the rear frame and therefore can be disposed near the rear wheel. As a result, the function for preventing mud spatter can be improved while preventing an increase in the size of the rear fender. Consequently, the increase in the size of the rear portion of the vehicle can be suppressed. However, the license plate is also supported by the seat frame in the straddled vehicle of Japanese Laid-Open Patent Publication No. H10-35562. As a result, there is still room for making the size of the rear portion of the vehicle smaller.

Meanwhile, the position of the rear wheel relative to the rear arm may be changed during maintenance for adjusting the chain or attaching or removing the rear wheel and the like. In this case, the clearance between the rear fender and the rear wheel may be changed due to the change of the position of the rear wheel when attaching the rear fender to the rear arm as in Japanese Laid-Open Patent Publication No. H10-35562. There is a concern that the function for preventing mud spatter may be reduced if the clearance between the rear fender and the rear wheel is changed from a suitable value. As a result, it is not easy to reliably assure the desirable function for preventing mud spatter in the straddled vehicle of Japanese Laid-Open Patent Publication No. H10-35562.

An object of the present invention is to a straddled vehicle which can reduce the size of the rear portion of the straddled vehicle and reliably assure a desired function for preventing mud spatter with the rear fender. According to the present invention said object is solved by a straddled vehicle having the features of independent claim 1. Preferred embodiments are laid down in the dependent claims.

A straddled vehicle according to an aspect of the present teaching includes a rear arm, an axle shaft, a rear wheel, and a rear fender unit. The axle shaft is attached to the rear arm. The rear wheel is supported by the axle shaft. The rear fender unit overlaps a portion of the rear wheel as seen from behind the vehicle. The rear fender unit is attached to the axle shaft.

The rear fender unit includes an attachment portion for a license plate, a license plate lamp, an electrical wire, and a length adjusting portion. The license plate lamp is configured to illuminate the license plate and is attached to the attachment portion. The electrical wire is connected to the license plate lamp. The length adjusting portion is configured to adjust the length of the electrical wire in response to the position of the rear wheel relative to the rear arm.

The rear fender unit is attached to the axle shaft in the straddled vehicle according to the present aspect. As a result, a function for preventing mud spatter can be improved while preventing an increase in the size of the rear fender in comparison to when the rear fender unit is supported by the seat frame. Consequently, the increase in the size of the rear portion of the vehicle can be suppressed.

Moreover, the rear fender unit includes the attachment portion for the license plate and the license plate lamp. As a result, the size of the rear portion of the vehicle can be made smaller in comparison to when the attachment portion for the license plate and the license plate lamp are supported by the seat frame.

Furthermore, the rear fender unit is attached to the axle shaft. As a result, the positions of the rear fender unit and the rear wheel can be changed when changing the position of the rear wheel relative to the rear arm during maintenance such as chain adjustment. As a result, the clearance between the rear wheel and the rear fender unit can be maintained. Consequently, the desirable function for preventing mud spatter due to the rear fender can be reliably assured.

The electrical wire connected to the license plate lamp extends from the rear fender unit and is connected to a power source such as a battery. Therefore, there is a concern that the electrical wire could hinder the movement of the rear wheel when the positions of the rear wheel and the rear fender unit are changed during maintenance.

However, the straddled vehicle according to the present teaching is provided with the length adjusting portion for adjusting the length of the electrical wire. As a result, the length of the electrical wire can be adjusted by using the length adjusting portion even if the positions of the rear wheel and the rear fender unit are changed during maintenance. Consequently, the electrical wire hindering the movement of the rear wheel can be limited whereby maintenance performance can be improved.

The length adjusting portion may include a wire case. The wire case may be capable of housing the electrical wire while the electrical wire is slackened. In this case, the degree of the slackening of the electrical wire inside the wire case can be adjusted whereby the length of the electrical wire can be adjusted.

The wire case may house the electrical wire in a wound state and may house the electrical wire in a manner that allows the diameter of the winding to be changed. In this case, the diameter of the winding of the electrical wire inside the wire case can be adjusted whereby the length of the electrical wire can be adjusted.

The rear fender unit may further include a mud guard and a stay. The mud guard may be disposed facing the rear wheel. The stay may support the mud guard and may be attached to the axle shaft.

The length adjusting portion may be provided on the stay. In this case, the size of the mud guard can be reduced in comparison to when the length adjusting portion is provided in the mud guard.

The length adjusting portion may include a guiding groove for guiding the electrical wire lead out from the stay. In this case, the direction of the electrical wire extending from the stay can be guided by the guiding groove.

The stay may include a first stay and a second stay. The first stay may be attached to the axle shaft. The second stay may be separate from the first stay and may be attached to the first stay. In this case, the complex shape of the stays can be formed easily.

At least a portion of the length adjusting portion may be disposed between the first stay and the second stay. In this case, the length adjusting portion can be fixed by fixing the first stay and the second stay to each other.

The rear arm may include a first uneven portion. The stay may include a second uneven portion. The stay may be locked to the rear arm due to the second uneven portion engaging with the first uneven portion. In this case, the stay can be locked with a simple structure.

The first uneven portion and the second uneven portion may extend in the direction in which the rear wheel is moved relative to the rear arm. In this case, the second uneven portion is caused to slide in the movement direction of the rear wheel with respect to the first uneven portion, whereby the rear wheel can be moved easily without being hindered by the first and second uneven portions for locking.

The straddled vehicle may further include a sprocket, a chain, and a chain guard. The sprocket may be attached to the rear wheel. The chain may be wound around the sprocket. The chain guard may be disposed above the chain. The electrical wire may be disposed along the chain guard. In this case, the passage length of the electrical wire can be reduced in comparison to when the electrical wire is disposed along the rear arm.

The straddled vehicle may further include a wire cover. The wire cover may be attached to the chain guard and may cover the electrical wire. In this case, the electrical wire can be protected by the wire cover.

The electrical wire may include a first wire, a second wire, and a connector. The connector may connect the first wire and the second wire. The connector may be disposed inside the wire cover. In this case, the electrical wire can be separated at the connector whereby the rear fender unit can be removed easily. Accordingly, maintenance performance can be improved.

The rear fender unit may be capable of moving with the rear wheel relative to the rear arm. As a result, maintenance performance can be improved.

### BRIEF DESCRIPTION OF THE DRAWINGS

- FIG. 1: is a left side view of a straddled vehicle.
- FIG. 2: is a rear view of the straddled vehicle.
- FIG. 3: is a left side view illustrating a configuration in the vicinity of the rear wheel.
- FIG. 4: is a right side view illustrating the configuration in the vicinity of the rear wheel.
- FIG. 5: is a perspective view illustrating the configuration in the vicinity of the rear wheel.
- FIG. 6: is an exploded perspective view of a rear fender unit.
- FIG. 7: is a perspective view as seen from the right of a portion of the rear fender unit and the rear arm.
- FIG. 8: is a right side view of a portion of the rear fender unit and the rear arm.
- FIG. 9: is an enlarged perspective view of a length adjusting portion.
- FIG. 10: is a view illustrating a stay and the length adjusting portion while a second stay and a second wire case are removed.
- FIG. 11: is an enlarged view of an attachment portion of the rear arm and the stay.
- FIG. 12: is a cross-sectional view along line XII-XII in FIG. 11.
- FIG. 13: is a view illustrating a position adjustment method of the rear wheel.
- FIG. 14: is a view illustrating a position adjustment method of the rear wheel.
- FIG. 15: illustrates the length adjusting portion according to a modified example.

### DETAILED DESCRIPTION OF THE PREFERRED EMBODIMENTS

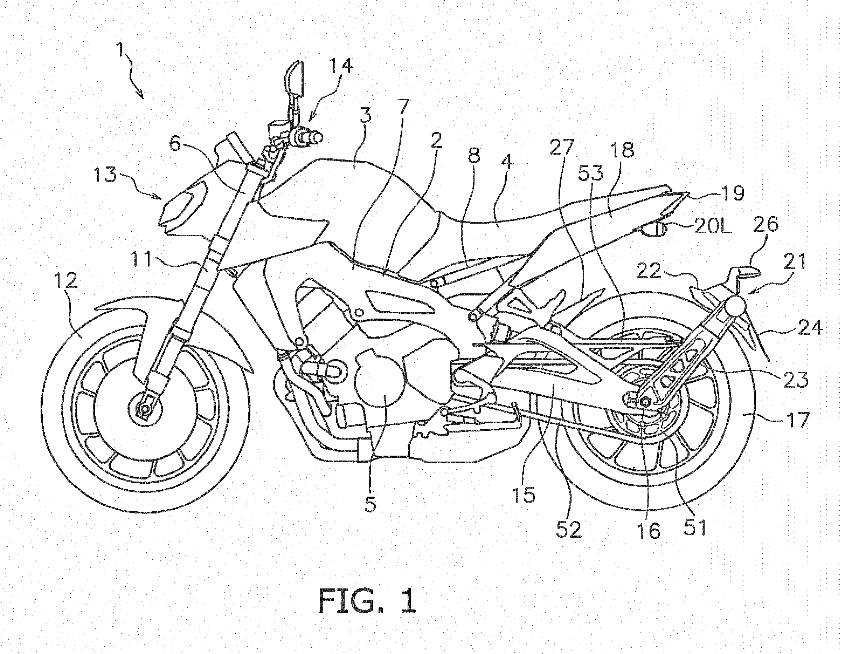

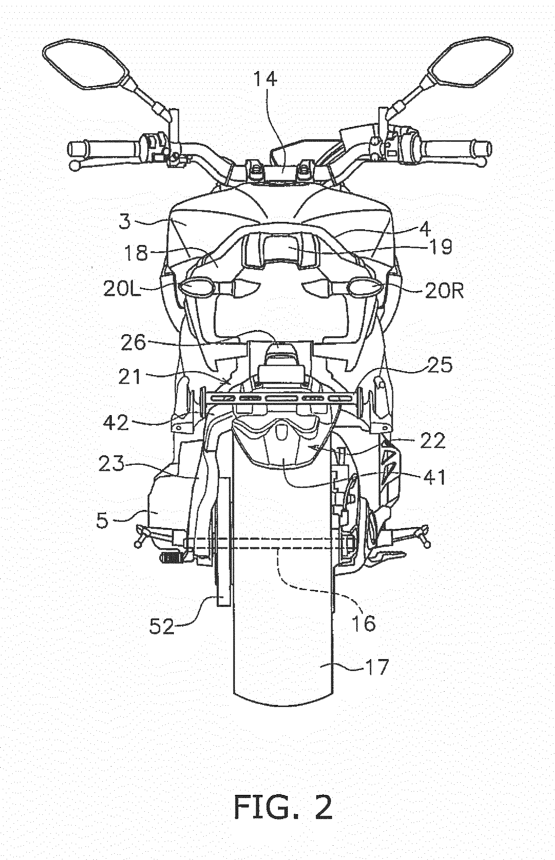

The following is a description of a straddled vehicle 1 according to the present embodiment with reference to the drawings. FIG. 1 is a side view of the straddled vehicle 1. FIG. 2 is a rear view of the straddled vehicle 1. In the present embodiment, the straddled vehicle 1 is a motorcycle. The straddled vehicle 1 has a frame 2, a fuel tank 3, a seat 4, and an engine 5.

The front-back direction of the straddled vehicle 1, the up-down direction of the straddled vehicle 1, and the left-right direction of the straddled vehicle 1 are respectively the front and back, up and down, and left and right directions as seen from a rider of the straddled vehicle 1. Moreover, the front-back direction does not only indicate a direction parallel to the front-back direction of the straddled vehicle 1, but also includes any direction slanted within a range of ±45° to the front-back direction of the straddled vehicle 1. In other words, any direction closer to the front-back direction than the left-right direction and the up-down direction is included in the front-back direction.

Similarly, the up-down direction includes any direction slanted within a range of ±45° to the up-down direction of the straddled vehicle 1. In other words, any direction closer to the up-down direction than the front-back direction and the left-right direction is included in the up-down direction.

Similarly, the left-right direction includes any direction slanted within a range of ±45° to the left-right direction of the straddled vehicle 1. In other words, any direction closer to the left-right direction than the front-back direction or the up-down direction is included in the left-right direction.

The frame 2 includes a head pipe 6, a body frame 7, and a seat frame 8. The body frame 7 is connected to the head pipe 6 and is disposed rearward of the head pipe 6. The seat frame 8 extends rearward from the body frame 7.

The fuel tank 3 is disposed behind the head pipe 6. The fuel tank 3 is disposed above the body frame 7. The seat 4 is arranged behind the fuel tank 3. The seat 4 is disposed above the seat frame 8. The engine 5 is disposed under the fuel tank 3. The engine 5 is supported by the body frame 7.

The straddled vehicle 1 includes a front fork 11, a front wheel 12, and a headlight unit 13. The front fork 11 is rotatably supported by the head pipe 6 via a steering shaft which is not illustrated. The front wheel 12 is rotatably supported at the lower portion of the front fork 11. An upper portion of the front fork 11 is coupled to a handlebar 14. The headlight unit 13 is disposed in front of the head pipe 6.

The straddled vehicle 1 includes a rear arm 15, an axle shaft 16, and a rear wheel 17. The rear arm 15 is swingably attached to the body frame 7. The axle shaft 16 is attached to the rear arm 15. The axle shaft 16 extends in the left-right direction. The rear wheel 17 is disposed behind the engine 5. The rear wheel 17 is supported by the axle shaft 16. The rear wheel 17 is supported by the body frame 7 via the axle shaft 16 and the rear arm 15.

The straddled vehicle 1 includes a rear cover 18, tail lamp 19, and left and right rear flashers 20L, 20R. The rear cover 18, the tail lamp 19, and the left and right rear flashers 20L, 20R are disposed above the rear wheel 17. The rear cover 18 is disposed under the rear end of the seat. The rear cover 18 is attached to the seat frame 8. The tail lamp 19 is attached to the rear cover 18. The left and right rear flashers 20L, 20R are disposed below the tail lamp 19. The left and right rear flashers 20L, 20R protrude to the left and right from the rear cover 18.

The straddled vehicle 1 includes a rear fender unit 21. The rear fender unit 21 is not attached to the rear cover 18 or the seat frame 8, but is attached to the axle shaft 16. As illustrated in FIG. 2, the rear fender unit 21 overlaps a portion of the rear wheel 17 as seen from behind the vehicle. Details of the rear fender unit 21 will be discussed below.

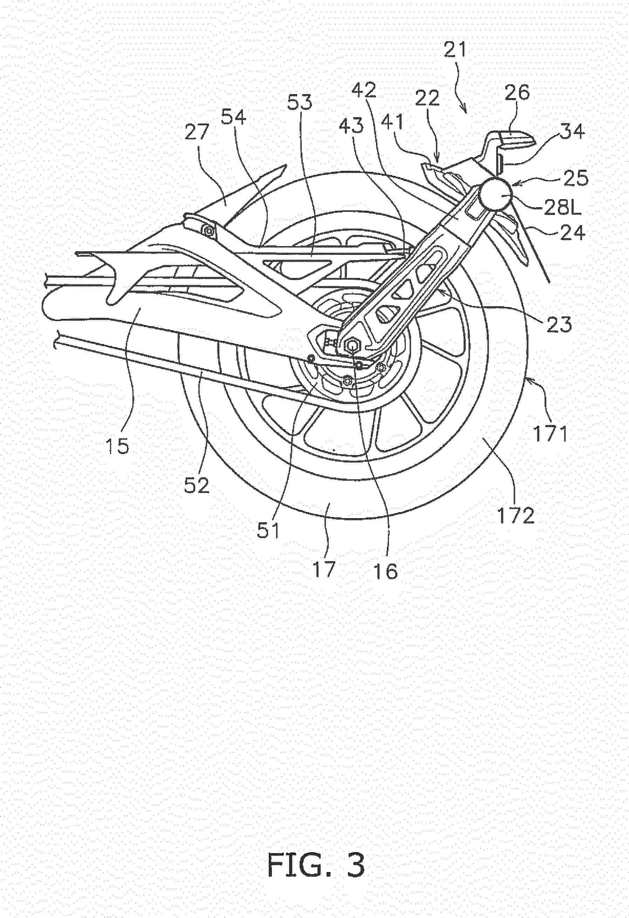

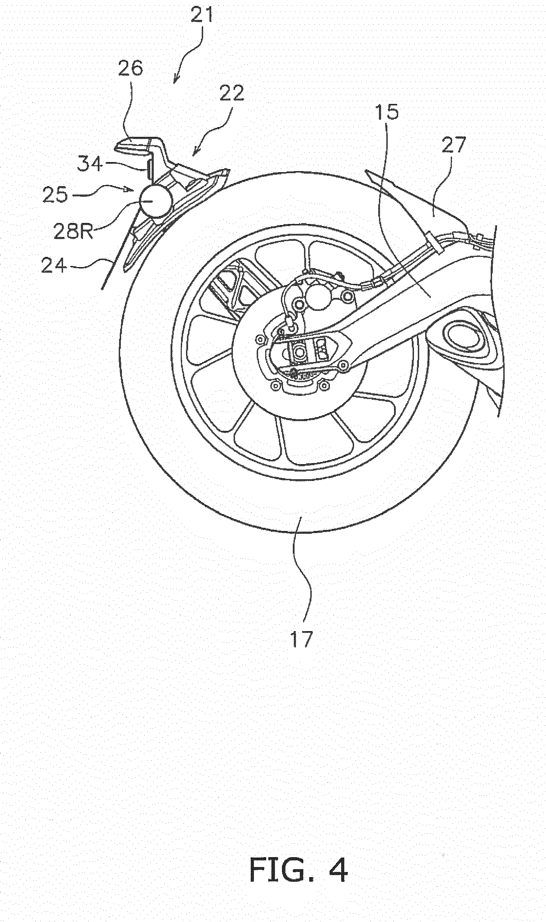

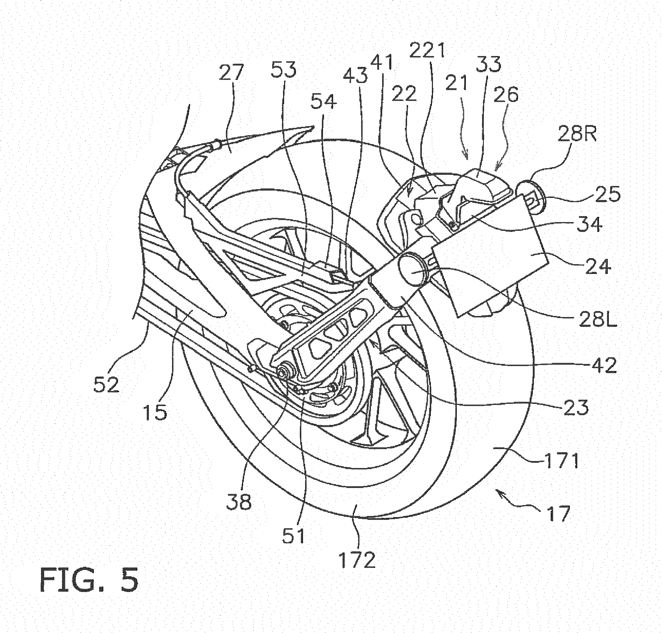

FIG. 3 is a left side view illustrating a configuration in the vicinity of the rear wheel 17. FIG. 4 is a right side view illustrating the configuration in the vicinity of the rear wheel 17. FIG. 5 is a perspective view illustrating the configuration in the vicinity of the rear wheel 17.

The rear fender unit 21 includes a mud guard 22, a stay 23, an attachment portion 25 for a license plate 24, and a lamp unit 26 for the license plate 24. The mud guard 22 is disposed facing the rear wheel 17. The mud guard 22 overlaps a portion of the rear wheel 17 as seen from the rear of the vehicle. The mud guard 22 overlaps the upper end the rear wheel 17 as seen from the rear of the vehicle.

The front end of the mud guard 22 is positioned higher than the upper end of the rear wheel 17. The front end of the mud guard 22 is positioned rearward of the center of rotation of the rear wheel 17. The front end of the mud guard 22 is positioned higher than the center of rotation of the rear wheel 17.

The rear end of the mud guard 22 is positioned forward of the rear end of the rear wheel 17. The rear end of the mud guard 22 is positioned higher than the center of rotation of the rear wheel 17. The rear end of the mud guard 22 is positioned rearward of the center of rotation of the rear wheel 17.

An inner fender 27 is disposed forward of the mud guard 22. The inner fender 27 is attached to the body frame 7 or the rear arm 15. The inner fender 27 is disposed facing the rear wheel 17. The rear end of the inner fender 27 is disposed forward of the center of rotation of the rear wheel 17. The rear end of the inner fender 27 is disposed forward of the front end of the mud guard 22. The mud guard 22 is disposed so as to be separated from the inner fender 27.

The stay 23 supports the mud guard 22. The stay 23 is attached to the axle shaft 16. The stay 23 extends rearward and obliquely upward from the axle shaft 16 as seen in a side view of the vehicle. The stay 23 is disposed on one side of the rear wheel 17. The stay 23 is coupled to one side portion of the mud guard 22.

The stay 23 is disposed on the left side of the rear wheel 17 in the present embodiment. The stay 23 is coupled to a left side portion of the mud guard 22. However, the stay 23 may be disposed on the right side of the rear wheel 17. The stay 23 may be coupled to a right side portion of the mud guard 22. As illustrated in FIG. 4, no stay is provided on the other side of the rear wheel 17. That is, the mud guard 22 is supported in a cantilever manner by the stay 23 disposed on one side of the rear wheel 17.

The attachment portion 25 for the license plate 24 is a member separate from the mud guard 22 and is attached to the mud guard 22. However, the attachment portion 25 for the license plate 24 may be formed in an integrated manner with the mud guard 22. The license plate 24 is attached to the attachment portion 25 for the license plate 24.

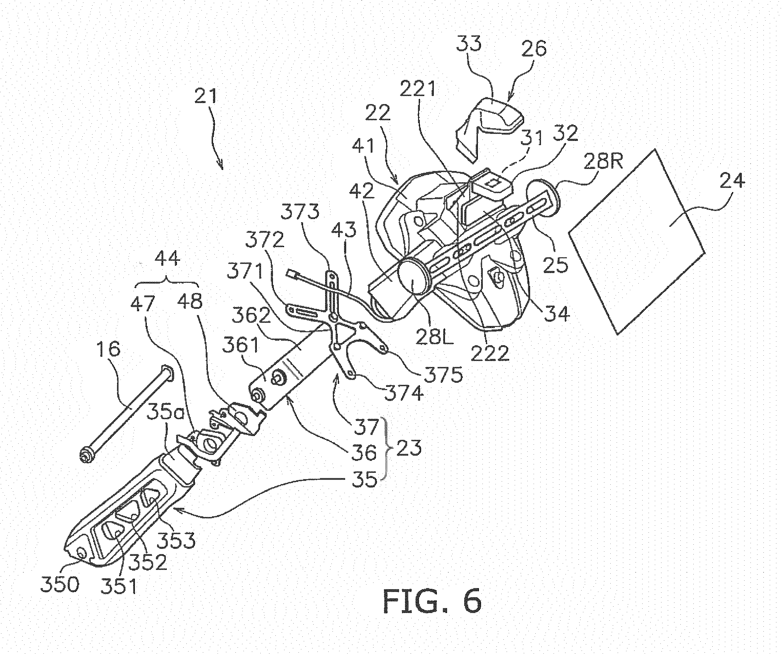

FIG. 6 is an exploded perspective view of the rear fender unit 21. As illustrated in FIG. 6, the attachment portion 25 for the license plate 24 extends in the left-right direction. Reflection plates 28L, 28R are attached to the left and right ends of the attachment portion 25 for the license plate 24. The attachment portion 25 for the license plate 24 is fixed to the mud guard 22 by a fixing means such as a bolt.

The lamp unit 26 is disposed above the attachment portion 25 for the license plate 24. The lamp unit 26 is attached to the mud guard 22. The lamp unit 26 includes a license plate lamp 31, a lamp support portion 32, and a lamp cover 33.

The license plate lamp 31 is a LED lamp, for example. The license plate lamp 31 may be another lighting apparatus such as a bulb. The license plate lamp 31 is disposed above the attachment portion 25 for the license plate 24. The license plate lamp 31 irradiates light downward. The license plate lamp 31 illuminates the license plate 24 attached to the attachment portion 25 for the license plate 24.

The lamp support portion 32 is attached to the mud guard 22. The mud guard 22 includes a lamp attachment portion 221 for attaching the lamp unit 26. The lamp attachment portion 221 is provided so as to protrude upward. The lamp support portion 32 is attached to the lamp attachment portion 221. The lamp support portion 32 is disposed so as to protrude rearward from the lamp attachment portion 221.

The license plate lamp 31 is attached to the lamp support portion 32. The lamp support portion 32 may include a circuit board to which an LED is attached. Alternatively, the lamp support portion 32 may include a socket to which a bulb is attached. A reflection plate 34 is disposed between the lamp support portion 32 and the attachment portion 25 for the license plate 24.

The lamp cover 33 is disposed above the lamp support portion 32. The lamp cover 33 covers the lamp support portion 32 and the license plate lamp 31 from above. An opening 222 is provided in the mud guard 22 to allow a belowmentioned electrical wire to pass through. The lamp cover 33 is attached to the mud guard 22 so as to cover the opening 222.

As illustrated in FIG. 6, the stay 23 includes a first stay 35, a second stay 36, and a third stay 37. The first stay 35 is attached to the axle shaft 16. The first stay 35 extends rearward and obliquely upward from the axle shaft 16 as seen in a side view of the vehicle. The first stay 35 has a plurality of holes 351, 352, 353. The plurality of holes 351, 352, 353 is disposed in the longitudinal direction of the first stay 35.

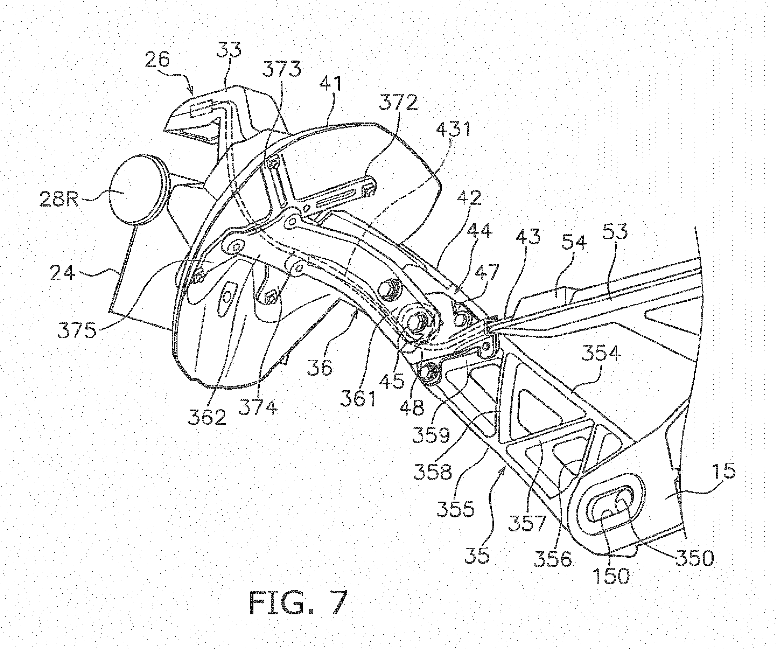

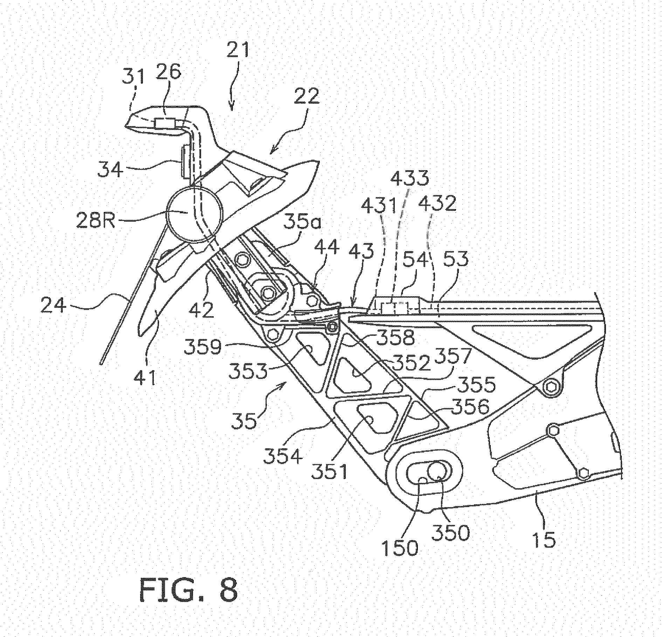

FIG. 7 is a perspective view as seen from the right of a portion of the rear fender unit 21 and the rear arm 15. FIG. 8 is a right side view of a portion of the rear fender unit 21 and the rear arm 15. As illustrated in FIGS. 7 and 8, the first stay 35 includes a plurality of ribs 354-359. The plurality of ribs 354 and 355 extends in the longitudinal direction of the first stay 35. The plurality of ribs 356-359 extends in the direction intersecting the longitudinal direction of the first stay 35 and are coupled to the ribs 354 and 355 that extend in the longitudinal direction.

As illustrated in FIG. 8, the first stay 35 has a hole 350. The hole 350 is provided at the base end portion of the first stay 35. The rear arm 15 includes a long hole 150. The long hole 150 extends in the vehicle front-back direction. The hole 350 of the first stay 35 is disposed so as to overlap the long hole 150 of the rear arm 15. The axle shaft 16 is inserted into the hole 350 of the first stay 35 and the long hole 150 of the rear arm 15. The axle shaft 16 is attached to the rear arm 15 with an axle nut 38 as illustrated in FIG. 5. The first stay 35 is also attached to the axle shaft 16 and the rear arm 15 with the axle nut 38.

As illustrated in FIG. 3, the mud guard 22 includes a body portion 41 and an arm portion 42. The body portion 41 overlaps a portion of the rear wheel 17 as seen from the rear of the vehicle. Specifically, the body portion 41 overlaps a portion of a tread portion 171 of the rear wheel 17 as seen from the rear of the vehicle. The arm portion 42 extends forward and obliquely downward from one side of the body portion 41. The arm portion 42 overlaps a portion of the rear wheel 17 as seen in a side view of the vehicle. Specifically, the arm portion 42 overlaps a portion of a side portion 172 of the rear wheel 17 as seen in a side view of the vehicle.

As illustrated in FIGS. 6 and 8, a tip end portion 35a of the first stay 35 is disposed laterally inside of the arm portion 42. The tip end portion 35a of the first stay 35 overlaps the arm portion 42 as seen in a side view of the vehicle.

The second stay 36 is separate from the first stay 35 and is attached to the first stay 35. As illustrated in FIG. 7, the second stay 36 is fixed to the first stay 35 with a fixing member such as a bolt. The second stay 36 has an L-shaped curved shape. The second stay 36 includes a first attachment portion 361 and a second attachment portion 362. The second stay 36 has a shape that is curved between the first attachment portion 361 and the second attachment portion 362.

The first attachment portion 361 is disposed laterally inside of the first stay 35. The first attachment portion 361 is attached to the first stay 35. Specifically, the first attachment portion 361 is attached to an inner lateral surface of the tip end portion 35a of the first stay 35. The second attachment portion 362 is disposed opposing the inner surface of the mud guard 22. The second attachment portion 362 is attached to the inner surface of the mud guard 22 via the third stay 37.

The third stay 37 is separate from the second stay 36 and is attached to the second stay 36. The third stay 37 is attached to the inner surface of the mud guard 22. As illustrated in FIG. 6, the third stay 37 includes a stay attachment portion 371. The stay attachment portion 371 is attached to the second stay 36. The stay attachment portion 371 is fixed to the second stay 36 with a fixing member such as a bolt.

The third stay 37 includes a plurality of mud guard support portions 372-375. The plurality of mud guard support portions 372-375 extends along the inner surface of the mud guard 22. The plurality of mud guard support portions 372-375 extends in directions different from each other. Specifically, the plurality of mud guard support portions 372-375 includes a first mud guard support portion 372 and a second mud guard support portion 373. The first mud guard support portion 372 extends to the left and obliquely upward from the stay attachment portion 371. The second mud guard support portion 373 extends to the right and obliquely upward from the stay attachment portion 371.

The plurality of mud guard support portions 372-375 includes a third mud guard support portion 374 and a fourth mud guard support portion 375. The third mud guard support portion 374 extends to the left and obliquely downward from the stay attachment portion 371. The fourth mud guard support portion 375 extends to the right and obliquely downward from the stay attachment portion 371. The plurality of mud guard support portions 372-375 is attached to the mud guard 22. As illustrated in FIG. 7, the plurality of mudguard support portions 372-375 is fixed to the mud guard 22 with fixing members such as bolts.

The rear fender unit 21 includes an electrical wire 43. The electrical wire 43 is connected to the license plate lamp 31. As illustrated in FIGS. 7 and 8, the rear fender unit 21 includes a length adjusting portion 44 for adjusting the length of the electrical wire 43.

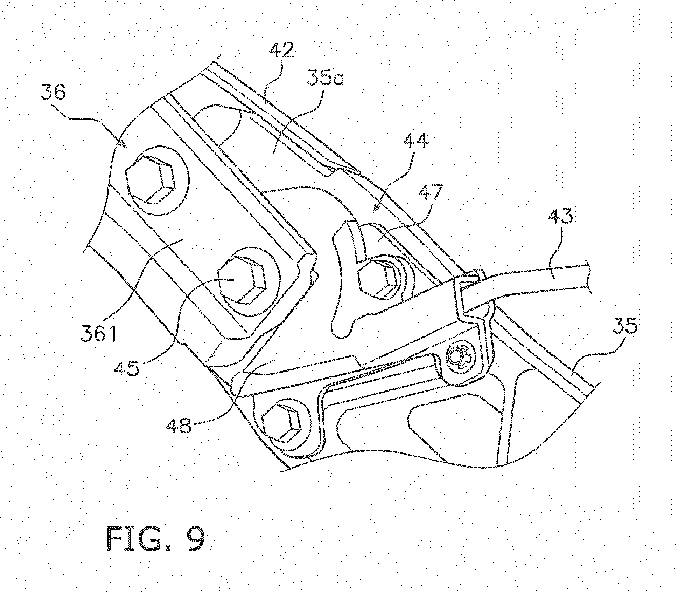

The length adjusting portion 44 is provided on the stay 23. The length adjusting portion 44 is disposed laterally inside of the stay 23. The length adjusting portion 44 overlaps the stay 23 as seen in a side view of the vehicle. FIG. 9 is an enlarged perspective view of the length adjusting portion 44.

As illustrated in FIG. 9, at least a portion of the length adjusting portion 44 is disposed between the first stay 35 and the second stay 36. The length adjusting portion 44 is fixed to the second stay 36 and to the first stay 35. The length adjusting portion 44 is fixed to the first stay 35 with a bolt 45 that is shared with the second stay 36.

As illustrated in FIG. 6, the length adjusting portion 44 includes a first wire case 47 and a second wire case 48. The first wire case 47 and the second wire case 48 are fixed to each other. The first wire case 47 and the second wire case 48 are capable of housing the electrical wire 43 while the electrical wire 43 is slackened. The electrical wire 43 is housed in a space between the first wire case 47 and the second wire case 48.

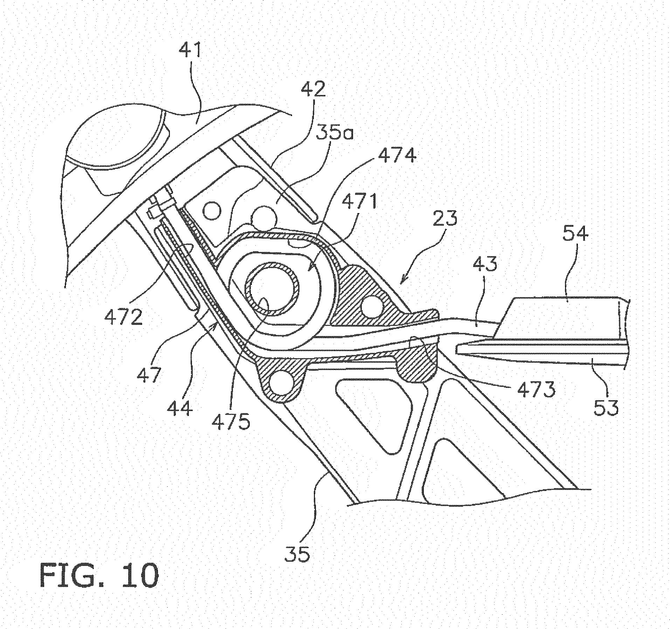

FIG. 10 is a view illustrating the stay 23 and the length adjusting portion 44 while the second stay 36 and the second wire case 48 are removed. Hatching is added to a portion of the first wire case 47 in FIG. 10 to facilitate understanding.

As illustrated in FIG. 10, the first wire case 47 includes a wiring housing portion 471, a first guiding groove 472, and a second guiding groove 473. The wiring housing portion 471 houses the electrical wire 43 in a wound state. The wiring housing portion 471 includes an annular groove 474. A hole 475 is provided in the middle portion of the wiring housing portion 471, and the bolt 45 (see FIG. 9) for fixing the second stay 36 to the first stay 35 passes through the hole 475. The width of the annular groove 474 of the wiring housing portion 471 is greater than the diameter of the electrical wire 43. As a result, the wiring housing portion 471 houses the electrical wire 43 in a manner that allows the diameter of the winding of the electrical wire 43 to be changed.

The first guiding groove 472 communicates with the wiring housing portion 471. The first guiding groove 472 extends from the wiring housing portion 471 toward the mud guard 22. The first guiding groove 472 guides the electrical wire 43 that extends from the mud guard 22 toward the wiring housing portion 471. The second guiding groove 473 communicates with the wiring housing portion 471. The second guiding groove 473 extends from the wiring housing portion 471 toward the front of the vehicle. The second guiding groove 473 guides the electrical wire 43 that is lead out from the stay 23.

Specifically as illustrated in FIG. 3, the straddled vehicle 1 includes a sprocket 51, a chain 52, and a chain guard 53. The sprocket 51 is attached to the rear wheel 17 and rotates with the rear wheel 17. The chain 52 is wound around the sprocket 51. The chain guard 53 is disposed above the chain 52 and extends in the vehicle front-back direction. The chain guard 53 is attached to the rear arm 15. The rear end of the chain guard 53 is positioned higher than the rear end of the rear arm 15.

The abovementioned electrical wire 43 extends from the stay 23 toward the chain guard 53. The electrical wire 43 is disposed along the chain guard 53. The second guiding groove 473 guides the electrical wire 43 that is lead out from the stay 23 toward the chain guard 53. A wire cover 54 is attached to the chain guard 53. The wire cover 54 covers the electrical wire 43. Specifically, the electrical wire 43 is disposed so as to pass through a space between the wire cover 54 and the chain guard 53.

The second wire case 48 may have a shape that is the same as that of the second guiding groove 473 of the first wire case 47. The second wire case 48 may have a shape that is the same as that of the first guiding groove 472 of the first wire case 47. The second wire case 48 may have a shape that is the same as that of the wiring housing portion 471 of the first wire case 47.

Alternatively, the first guiding groove 472 may be provided on only one of the first wire case 47 and the second wire case 48. The second guiding groove 473 may be provided on only one of the first wire case 47 and the second wire case 48. The wiring housing portion 471 may be provided on only one of the first wire case 47 and the second wire case 48.

As illustrated in FIG. 8, the electrical wire 43 includes a first wire 431, a second wire 432, and a connector 433. The first wire 431 is connected to the lamp unit 26. A portion of the first wire 431 is housed in the abovementioned wiring housing portion 471. The first wire 431 is disposed so as to straddle between the stay 23 and the chain guard 53. The second wire 432 is disposed along the chain guard 53.

The second wire 432 is connected to an electrical source such as a battery that is not illustrated. The connector 433 connects the first wire 431 and the second wire 432 in a detachable manner. The connector 433 is disposed inside the wire cover 54. That is, the first wire 431 and the second wire 432 are connected inside the wire cover 54 via the connector 433.

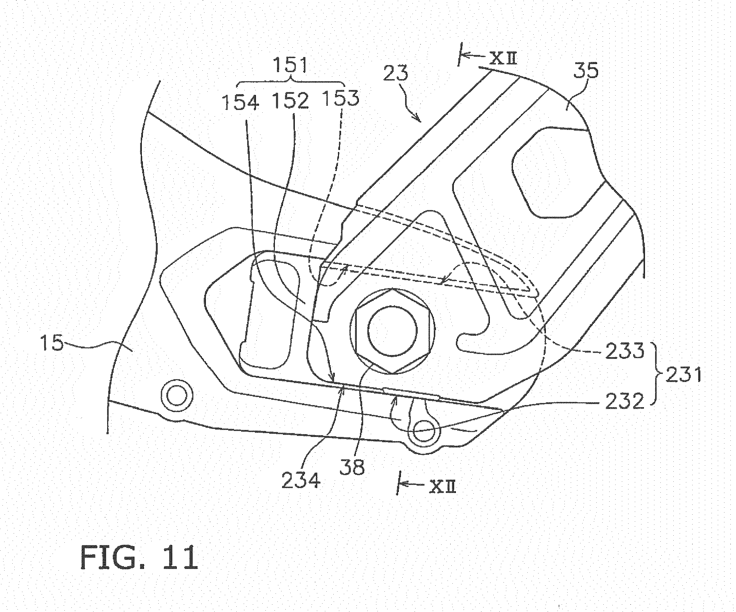

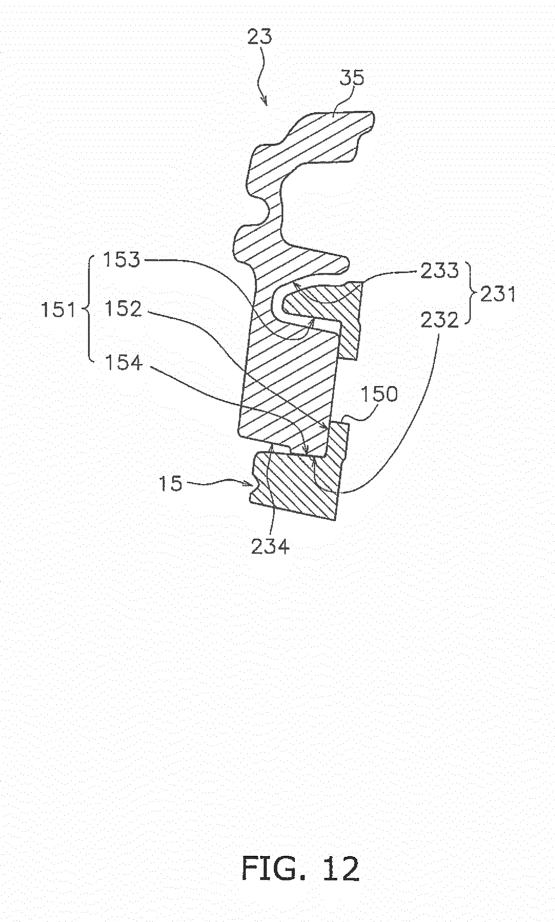

FIG. 11 is an enlarged view of an attachment portion of the rear arm 15 and the stay 23. FIG. 12 is a cross-sectional view along line XII-XII in FIG. 11. As illustrated in FIGS. 11 and 12, the rear arm 15 includes a first uneven portion 151. The first uneven portion 151 extends in the vehicle front-back direction and extends to the rear end of the rear arm 15. The first uneven portion 151 includes a bottom portion 152, a first upward protruding portion 153, and a first downward protruding portion 154.

The abovementioned long hole 150 is provided in the bottom portion 152. The first upward protruding portion 153 and the first downward protruding portion 154 protrude from the bottom portion 152 toward the laterally outside. The first upward protruding portion 153 and the first downward protruding portion 154 extend in the vehicle front-back direction. The first downward protruding portion 154 is positioned below the first upward protruding portion 153.

The base end portion of the stay 23 includes a second uneven portion 231. The second uneven portion 231 non-rotatably locks the stay 23 to the rear arm 15 by engaging with the first uneven portion 151. Specifically, the second uneven portion 231 is provided on the first stay 35. The second uneven portion 231 includes a second protruding portion 232 and a second recessed portion 233. The second protruding portion 232 is disposed lower than the axle shaft 16. The second protruding portion 232 protrudes from an end surface 234 of the base end portion of the stay 23. The end surface 234 of the base end portion of the stay 23 faces the first downward protruding portion 154, and the second protruding portion 232 protrudes toward the first downward protruding portion 154. The second protruding portion 232 comes into contact with the first downward protruding portion 154. Consequently, the stay 23 is non-rotatably locked to the rear arm 15.

The second recessed portion 233 is provided on the inner lateral surface of the stay 23. The second recessed portion 233 is recessed from the inner lateral surface of the stay 23 toward the laterally outside. The second recessed portion 233 is disposed higher than the axle shaft 16. The second recessed portion 233 extends in the vehicle front-back direction in the same way as the first upward protruding portion 153. As illustrated in FIG. 12, the first upward protruding portion 153 is disposed inside the second recessed portion 233. The first upward protruding portion 153 engages with the second recessed portion 233. Consequently, the stay 23 is non-rotatably locked to the rear arm 15.

Next, a method will be discussed for adjusting the position of the rear wheel 17 carried out during maintenance such as when adjusting the chain 52.

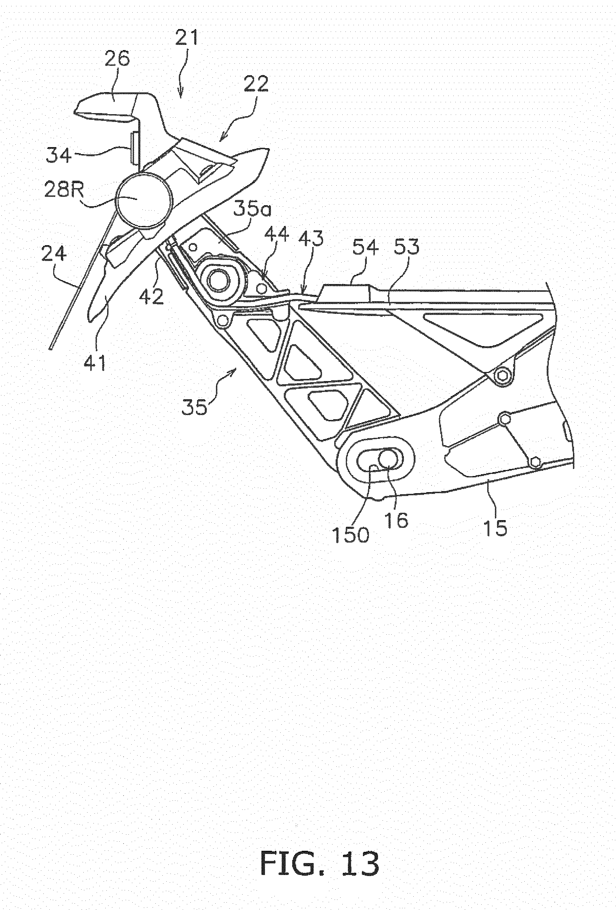

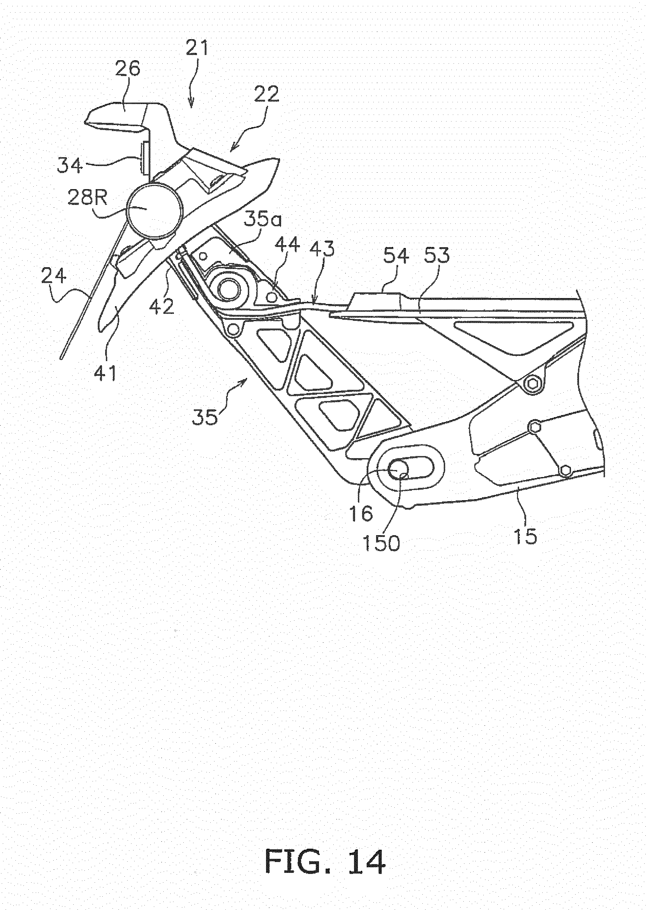

First, the axle nut 38 is loosened. As a result, the axle shaft 16 is capable of moving forward and backward along the long hole 150 of the rear arm 15. A worker is able to move the rear wheel 17 and the axle shaft 16 together forward or backward. For example, the worker can move the rear wheel 17 and the axle shaft 16 toward the rear relative to the rear arm 15. In this case, the axle shaft 16 moves from the position indicated in FIG. 13 to the position indicated in FIG. 14. As a result, the chain 52 can be stretched.

Alternatively, the worker can move the rear wheel 17 and the axle shaft 16 toward the front relative to the rear arm 15. In this case, the axle shaft 16 moves from the position indicated in FIG. 14 to the position indicated in FIG. 13. As a result, the chain 52 can be loosened.

The abovementioned rear fender unit 21 is attached to the axle shaft 16. As a result, when the rear wheel 17 and the axle shaft 16 are moved, the rear fender unit 21 also moves forward or backward relative to the rear arm 15 along with the rear wheel 17 and the axle shaft 16.

As illustrated in FIG. 14, when the rear fender unit 21 moves toward the rear relative to the rear arm 15 along with the rear wheel 17 and the axle shaft 16, the electrical wire 43 is pulled out of the length adjusting portion 44 and the diameter of the electrical wire 43 wound inside the length adjusting portion 44 is reduced. As a result, the electrical wire 43 extending from the length adjusting portion 44 can be lengthened in response to the movement of the rear wheel 17 and the axle shaft 16 toward the rear.

In contrast as illustrated in FIG. 13, when the rear fender unit 21 moves toward the front relative to the rear arm 15 along with the rear wheel 17 and the axle shaft 16, the electrical wire 43 is pushed back into the length adjusting portion 44 and the diameter of the electrical wire 43 wound inside the length adjusting portion 44 is increased. As a result, the electrical wire 43 extending from the length adjusting portion 44 can be shortened in response to the movement of the rear wheel 17 and the axle shaft 16 toward the front.

Mud spatter can be prevented by the rear fender unit 21 in the straddled vehicle 1 according to the present embodiment described above. The rear fender unit 21 is attached to the axle shaft 16. As a result, an increase in the size of the rear fender 21 can be prevented in comparison to when the rear fender unit 21 is supported by the seat frame 8.

The rear fender unit 21 includes the attachment portion 25 for the license plate 24, and the license plate lamp 31. As a result, the size of the rear portion of the straddled vehicle 1 can be made smaller in comparison to when the attachment portion 25 for the license plate 24 and the license plate lamp 31 are supported by the seat frame 8.

The rear fender unit 21 is attached to the axle shaft 16. As a result, even if the position of the rear wheel 17 is changed forward or backward relative to the rear arm 15 when performing maintenance such as adjusting the chain 52, the rear fender unit 21 moves with the rear wheel 17 whereby the positional relationship between the rear wheel 17 and the rear fender unit 21 is maintained. As a result, the clearance between the rear wheel 17 and the rear fender unit 21 can be maintained. Consequently, the desirable function for preventing mud spatter with the rear fender can be reliably assured.

Moreover as explained above, even if the position of the rear fender unit 21 and the rear wheel 17 is changed, the length of the electrical wire 43 can be adjusted with the length adjusting portion 44. Consequently, an instance of the electrical wire 43 hindering the movement of the rear wheel 17 can be limited whereby maintenance performance can be improved.

The length adjusting portion 44 is provided on the stay 23 instead of the mud guard 22. As a result, the size of the mud guard 22 can be made smaller in comparison to when the length adjusting portion 44 is provided on the mud guard 22.

The stay 23 has a structure such that the stay 23 is divided into the first stay 35 and the second stay 36. As a result, the stay 23 can be formed easily with a complex shape. Moreover, the length adjusting portion 44 is disposed between the first stay 35 and the second stay 36. As a result, the length adjusting portion 44 can be fixed by fixing the first stay 35 and the second stay 36 to each other.

The first uneven portion 151 and the second uneven portion 231 extend in the vehicle front-back direction. That is, the first uneven portion 151 and the second uneven portion 231 extend in the direction in which the rear wheel 17 moves relative to the rear arm 15. Therefore, when the rear wheel 17 is moved relative to the rear arm 15, the second uneven portion 231 is made to slide in the movement direction of the rear wheel 17 whereby the position of the rear wheel 17 can be adjusted easily without being hindered by the first and second uneven portions 151 and 231 for locking in a non-rotatable manner.

The electrical wire 43 is disposed along the chain guard 53. As a result, the passage length of the electrical wire 43 can be reduced in comparison to when the electrical wire 43 is disposed along the rear arm 15.

The electrical wire 43 is covered by the wire cover 54. As a result, the electrical wire 43 can be protected by the wire cover 54.

The first wire 431 and the second wire 432 are connected in a detachable manner with the connector 433. As a result, the electrical wire 43 can be separated at the connector 433 whereby the rear fender unit 21 can be removed easily from the rear arm 15. Moreover, the connector 433 is disposed inside the wire cover 54. As a result, the connector 433 can be protected by the wire cover 54.

While the straddled vehicle 1 according to the embodiment is a so-called on-road type motorcycle, the straddled vehicle according to the present teaching may also be another type of motorcycle such as an off-road vehicle, a moped, or a scooter and the like. The number of the front wheel is not limited to one and may be two or more. The number of the rear wheel is not limited to one and may be two or more.

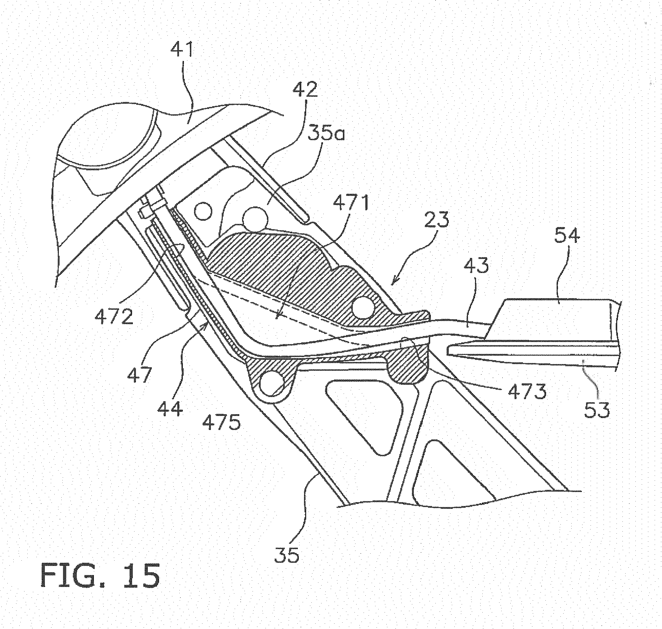

The structure and disposition of the length adjusting portion may be changed without being limited to the above embodiment. While the length adjusting portion is able to house the electrical wire in a slackened annular state in the above embodiment, the length adjusting portion may house the electrical wire in a different state. That is, a slackened state signifies a state in which the electrical wire 43 is expanded in the front-back direction, the left-right direction, or the up-down direction in a disposition in which the passage length is the shortest. For example, as illustrated in FIG. 15, the electrical wire 43 is not wound and is housed inside the length adjusting portion 44 in an arc-like slackened state. As illustrated in FIG. 15, the arc-like portion of the electrical wire 43 increases in size in the arc-like slackened state. In this case, by changing the amount of slack of the electrical wire 43, the length of the electrical wire 43 that is pulled out of the length adjusting portion 44 can be adjusted.

The structure and disposition of the attachment portion 25 of the license plate 24 may be changed without being limited to the above embodiment. The structure and disposition of the license plate lamp 31 may be changed without being limited to the above embodiment.

The structure and disposition of the mud guard 22 may be changed without being limited to the above embodiment. The structure and disposition of the stay 23 may be changed without being limited to the above embodiment. For example, the first stay 35 and the second stay 36 may be formed in an integrated manner. The structure and disposition of the first uneven portion 151 and the second uneven portion 231 may be changed without being limited to the above embodiment.

The structure and disposition of the electrical wire 43 may be changed. For example, the connector 433 may be omitted. The connector 433 may be disposed on the stay 23. The electrical wire 43 may be disposed along the rear arm 15. The wire cover 54 may be omitted.

## Claims

1. A straddled vehicle comprising:
a rear arm (15);
an axle shaft (16) attached to the rear arm (15);
a rear wheel (17) supported by the axle shaft (16);
a rear fender unit (21) overlapping a portion of the rear wheel (17) as seen from behind the vehicle, wherein
the rear fender unit (21) is attached to the axle shaft (16), and
the rear fender unit (21) includes:
an attachment portion (25) for a license plate (24),
**characterized by**
a license plate lamp (31) for illuminating the license plate (24) attached to the attachment portion (25);
an electrical wire (43) connected to the license plate lamp (31); and
a length adjusting portion (44) for adjusting a length of the electrical wire (43) in response to a position of the rear wheel (17) relative to the rear arm (15).

2. A straddled vehicle according to claim 1, **characterized in that** the length adjusting portion (44) includes a wire case (47, 48) that is capable of housing the electrical wire (43) in a slackened state.

3. A straddled vehicle according to claim 2, **characterized in that** the wire case (47, 48) houses the electrical wire (43) in a wound state and houses the electrical wire (43) in a manner that allows the diameter of the winding to be changed.

4. A straddled vehicle according to any one of claims 1 to 3, **characterized in that** the rear fender unit (21) further includes:
a mud guard (22) disposed facing the rear wheel (17); and
a stay (23) supporting the mud guard (22), the stay (23) attached to the axle shaft (16).

5. A straddled vehicle according to claim 4, **characterized in that** the length adjusting portion (44) is provided on the stay (23).

6. A straddled vehicle according to claim 5, **characterized in that** the length adjusting portion (44) includes a guiding groove (473) that guides the electrical wire (43) lead out from the stay (23).

7. A straddled vehicle according to claim 5 or 6, **characterized in that** the stay (23) includes
a first stay (35) attached to the axle shaft (16), and
a second stay (36) separate from the first stay (35), the second stay (36) attached to the first stay (35).

8. A straddled vehicle according to claim 7, **characterized in that** at least a portion of the length adjusting portion (44) is disposed between the first stay (35) and the second stay (36).

9. A straddled vehicle according to any one of claims 4 to 8, **characterized in that** the rear arm (15) includes a first uneven portion (151), and
the stay (23) includes a second uneven portion (231), the second uneven portion (231) engaging with the first uneven portion (151) to non-rotatably lock the stay (23) to the rear arm (15).

10. A straddled vehicle according to claim 9, **characterized in that** the first uneven portion (151) and the second uneven portion (231) extend in a direction that the rear wheel (17) is moved relative to the rear arm (15).

11. A straddled vehicle according to any one of claims 1 to 10, **characterized by:**
a sprocket (51) attached to the rear wheel (17);
a chain (52) wound around the sprocket (51); and
a chain guard (53) disposed above the chain (52), wherein,
the electrical wire (43) is disposed along the chain guard (53).

12. A straddled vehicle according to claim 11, **characterized by:**
a wire cover (54) attached to the chain guard (53), the wire cover (54) covering the electrical wire (43).

13. A straddled vehicle according to claim 12, **characterized in that** the electrical wire (43) includes:
a first wire (431);
a second wire (432); and
a connector (433) connecting the first wire (431) and the second wire (432), and
the connector (433) is disposed inside the wire cover (54).

14. A straddled vehicle according to any one of claims 1 to 13, **characterized in that** the rear fender unit (21) is movable with the rear wheel (17) relative to the rear arm (15).

15. A straddled vehicle according to any one of claims 1 to 14, **characterized in that** the axial shaft (17) is attached to the rear arm (15) to be adjustable in vehicle length direction.

## Patentansprüche

1. Ein Spreiz-Sitz-Fahrzeug, das umfasst:
einen hinteren Arm (15);
eine Axial-Welle (16), die an dem hinteren Arm (15) angebracht ist;
ein Hinter-Rad (17), das durch die Axial-Welle (16) gelagert ist;
eine hintere Schutzblech-Einheit (21), die einen Abschnitt von dem Hinter-Rad (17),
wenn von hinten von dem Fahrzeug gesehen, überlappt, wobei die hintere Schutzblech-Einheit (21) an der Axial-Welle (16) angebracht ist, und
die hintere Schutzblech-Einheit (21) beinhaltet:
einen Anbringungs-Abschnitt (25) für eine Kennzeichen-Platte (24),
**gekennzeichnet durch**
eine Kennzeichen-Platten-Leuchte (31), zum Beleuchten de Kennzeichen-Platte (24), die an dem Anbringungs-Abschnitt (25) angebracht ist;
ein Elektro-Kabel (43), das mit der Kennzeichen-Platten-Leuchte (31) verbunden ist; und
einen Längen-Einstellungs-Abschnitt (44), zum Einstellen einer Länge von dem Elektro-Kabel (43) in Erwiderung auf eine Position von dem Hinter-Rad (17) relativ zu dem hinteren Arm (15).

2. Ein Spreiz-Sitz-Fahrzeug gemäß zu Anspruch 1, **dadurch gekennzeichnet, dass** der Längen-Einstellungs-Abschnitt (44) ein Kabel-Gehäuse (47, 48) beinhaltet, das in der Lage ist, das Elektro-Kabel (43) in einem lockeren Zustand aufzunehmen.

3. Ein Spreiz-Sitz-Fahrzeug gemäß zu Anspruch 2, **dadurch gekennzeichnet, dass** das Kabel-Gehäuse (47, 48) das Elektro-Kabel (43) in einem gewickelten Zustand aufnimmt, und das Elektro-Kabel (43) in einer Weise aufnimmt, die es gestattet den Durchmesser der Wicklung zu ändern.

4. Ein Spreiz-Sitz-Fahrzeug gemäß zu irgendeinem der Ansprüche 1 bis 3, **dadurch gekennzeichnet, dass** die hintere Schutzblech-Einheit (21) weiter beinhaltet:
einen Schmutz-Schutz (22), der zugewandt zu dem Hinter-Rad (17) positioniert ist; und
eine Stütze (23), die den Schmutz-Schutz (22) lagert, die Stütze (23) ist an der Axial-Welle (16) angebracht.

5. Ein Spreiz-Sitz-Fahrzeug gemäß zu Anspruch 4, **dadurch gekennzeichnet, dass** der Längen-Einstellungs-Abschnitt (44) an der Stütze (23) vorgesehen ist.

6. Ein Spreiz-Sitz-Fahrzeug gemäß zu Anspruch 5, **dadurch gekennzeichnet, dass** der Längen-Einstellungs-Abschnitt (44) eine Führungs-Nut (473) beinhaltet, die das Elektro-Kabel (43), das von der Stütze (23) herausgeführt ist, führt.

7. Ein Spreiz-Sitz-Fahrzeug gemäß Anspruch 5 oder 6, **dadurch gekennzeichnet, dass** die Stütze (23) beinhaltet
eine erste Stütze (35), die an der Axial-Welle (16) angebracht ist, und
eine zweite Stützte (36), getrennt von der ersten Stütze (35), die zweite Stütze (36) ist an der ersten Stütze (35) angebracht.

8. Ein Spreiz-Sitz-Fahrzeug gemäß zu Anspruch 7, **dadurch gekennzeichnet, dass** zumindest ein Abschnitt von dem Längen-Einstellungs-Abschnitt (44) zwischen der ersten Stütze (35) und der zweiten Stütze (36) positioniert ist.

9. Ein Spreiz-Sitz-Fahrzeug gemäß zu irgendeinem der Ansprüche 4 bis 8, **dadurch gekennzeichnet, dass** der hintere Arm (15) einen ersten ungleichen Abschnitt (151) beinhaltet, und
die Stütze (23) einen zweiten ungleichen Abschnitt (231) beinhaltet, der zweite ungleiche Abschnitt (231) greift mit dem ersten ungleichen Abschnitt (151) ein, um die Stütze (23) an dem hinteren Arm (15) nicht drehbar zu verriegeln.

10. Ein Spreiz-Sitz-Fahrzeug gemäß zu Anspruch 9, **dadurch gekennzeichnet, dass** der erste ungleiche Abschnitt (151) und der zweite ungleiche Abschnitt (231) sich in einer Richtung erstrecken, in der das Hinter-Rad (17) relativ zu dem hinteren Arm (15) sich bewegt.

11. Ein Spreiz-Sitz-Fahrzeug gemäß zu irgendeinem der Ansprüche 1 bis 10, **gekennzeichnet durch:**
ein Ketten-Rad (51), das an dem Hinter-Rad (17) angebracht ist;
eine Kette (52), die um das Ketten-Rad (51) gewickelt ist; und
einen Ketten-Schutz (53), der oberhalb der Kette (52) positioniert ist, wobei das Elektro-Kabel (43) entlang dem Ketten-Schutz (53) positioniert ist.

12. Ein Spreiz-Sitz-Fahrzeug gemäß zu Anspruch 11, **gekennzeichnet durch:**
eine Kabel-Abdeckung (54), die an dem Ketten-Schutz (53) angebracht ist, die Kabel-Abdeckung (54) deckt das Elektro-Kabel (43) ab.

13. Ein Spreiz-Sitz-Fahrzeug gemäß zu Anspruch 12, **dadurch gekennzeichnet, dass** das Elektro-Kabel (43) beinhaltet:
ein erstes Kabel (431);
ein zweites Kabel (432); und
einen Verbinder (433), der das erste Kabel (431) und das zweite Kabel (432) verbindet, und der Verbinder (433) ist innerhalb der Kabel-Abdeckung (54) positioniert.

14. Ein Spreiz-Sitz-Fahrzeug gemäß zu irgendeinem der Ansprüche 1 bis 13, **dadurch gekennzeichnet, dass** die hintere Schutzblech-Einheit (21) mit dem Hinter-Rad (17) relativ zu dem hinteren Arm (15) bewegbar ist.

15. Ein Spreiz-Sitz-Fahrzeug gemäß zu irgendeinem der Ansprüche 1 bis 14, **dadurch gekennzeichnet, dass** die Axial-Welle (17) an dem hinteren Arm (15) angebracht ist, um in Fahrzeug-Längs-Richtung einstellbar zu sein.

## Revendications

1. Véhicule à enfourcher comprenant:
un bras arrière (15);
un arbre d'essieu (16) fixé au bras arrière (15);
une roue arrière (17) supportée par l'arbre d'essieu (16);
une unité de garde-boue arrière (21) chevauchant une partie de la roue arrière (17) vue de l'arrière du véhicule, dans laquelle l'unité de garde-boue arrière (21) est fixée à l'arbre d'essieu (16), et
l'unité de garde-boue arrière (21) comprend:
une partie de fixation (25) pour une plaque d'immatriculation (24),
**caractérisée par**
une lampe de plaque d'immatriculation (31) pour éclairer la plaque d'immatriculation (24) fixée à la partie de fixation (25);
un fil électrique (43) relié à l'éclairage de la plaque d'immatriculation (31); et
une partie de réglage de la longueur (44) pour ajuster une longueur du fil électrique (43) en réponse à une position de la roue arrière (17) par rapport au bras arrière (15).

2. Véhicule à enfourcher selon la revendication 1, **caractérisé en ce que** la partie de réglage de longueur (44) comprend un boîtier de fil (47, 48) qui est capable de loger le fil électrique (43) dans un état détendu.

3. Véhicule à enfourcher selon la revendication 2, **caractérisé en ce que** le boîtier de fil (47, 48) loge le fil électrique (43) dans un état enroulé et loge le fil électrique (43) d'une manière qui permet de modifier le diamètre de l'enroulement.

4. Véhicule à enfourcher selon l'une quelconque des revendications 1 à 3, **caractérisé en ce que** l'unité de garde-boue arrière (21) comprend en outre:
un garde-boue (22) disposé face à la roue arrière (17) un étai (23) supportant le garde-boue (22), l'étai (23) étant fixé à l'arbre d'essieu (16).

5. Véhicule à enfourcher selon la revendication 4, **caractérisé en ce que** la partie de réglage de la longueur (44) est prévue sur l'étai (23).

6. Véhicule à enfourcher selon la revendication 5, **caractérisé en ce que** la partie de réglage de la longueur (44) comprend une rainure de guidage (473) qui guide le fil électrique (43) sortant du support (23).

7. Véhicule à enfourcher selon les revendications 5 ou 6, **caractérisé en ce que** l'étai (23) comprend:
un premier étai (35) fixé à l'arbre d'essieu (16), et
un second étai (36) séparé du premier séjour (35), le second séjour (36) étant rattaché au premier séjour (35).

8. Véhicule à enfourcher selon la revendication 7, **caractérisé en ce qu'**au moins une partie de la partie de réglage de la longueur (44) est disposée entre le premier étai (35) et le second étai (36).

9. Véhicule à enfourcher selon l'une quelconque des revendications 4 à 8, **caractérisé en ce que** le bras arrière (15) comprend une première partie inégale (151), et
l'étai (23) comprend une seconde partie inégale (231), la seconde partie inégale (231) s'engageant avec la première partie inégale (151) pour verrouiller l'étai (23) au bras arrière (15) de manière non rotative.

10. Véhicule à enfourcher selon la revendication 9, **caractérisé en ce que** la première partie inégale (151) et la seconde partie inégale (231) s'étendent dans une direction dans laquelle la roue arrière (17) est déplacée par rapport au bras arrière (15).

11. Véhicule à enfourcher selon l'une quelconque des revendications 1 à 10, **caractérisé par**:
un pignon (51) fixé à la roue arrière (17);
une chaîne (52) enroulée autour du pignon (51); et
un garde-chaîne (53) disposé au-dessus de la chaîne (52), dans lequel le fil électrique (43) est disposé le long du garde-chaîne (53).

12. Véhicule à enfourcher selon la revendication 11, **caractérisé par** :
un couvercle de fil (54) fixé au garde-chaîne (53), le couvercle de fil (54) recouvrant le fil électrique (43).

13. Véhicule à enfourcher selon la revendication 12, **caractérisé en ce que** le fil électrique (43) comprend:
un premier fil (431);
un second fil (432); et
un connecteur (433) reliant le premier fil (431) et le second fil (432), et le connecteur (433) est disposé à l'intérieur du couvercle du fil (54).

14. Véhicule à enfourcher selon l'une quelconque des revendications 1 à 13, **caractérisé en ce que** l'unité de garde-boue arrière (21) est mobile avec la roue arrière (17) par rapport au bras arrière (15).

15. Véhicule à enfourcher selon l'une quelconque des revendications 1 à 14, **caractérisé en ce que** l'arbre axial (17) est fixé au bras arrière (15) pour être réglable dans la direction de la longueur du véhicule.
